# EUROPEAN PATENT SPECIFICATION

(11) **EP 4 184 139 B1**
(45) Date of publication and mention of the grant of the patent: **05.11.2025**
(21) Application number: 21208736.5
(22) Date of filing: 17.11.2021
(51) Int. Cl.: G01M 1/04, G01M 1/22

(54) **A ROTATING IMBALANCE MEASURING SYSTEM FOR A BALANCING MACHINE OF A ROTATING PIECE TO BE MACHINED**
ROTIERENDES UNWUCHTMESSSYSTEM FÜR EINE AUSWUCHTMASCHINE EINES ZU BEARBEITENDEN ROTIERENDEN TEILS
SYSTEME DE MESURE DU BALOURD ROTATIF POUR UNE MACHINE D'EQUILIBRAGE D'UNE PIECE ROTATIVE A USINER

(43) Date of publication of application: 24.05.2023
(73) Proprietor: BALANCE SYSTEMS S.r.L., 20145 Milano (IT)
(72) Inventor: TRIONFETTI, Mr. Gianni, I - 20041 AGRATE BRIANZA (Monza Brianza) (IT)
(74) Representative: Lunati & Mazzoni S.r.L.

(56) References cited:
- GB-A- 1 126 159
- GB-A- 964 937
- US-A- 4 981 043

## Description

The present invention relates to a rotation imbalance measuring system for balancing machine of a piece in rotating machining of the type specified in the preamble of the first claim.

In particular, the present invention relates to a measurement system capable of carrying out different types of measurements relating to the rotation of a piece in machining without having to modify or replace the system, or rather by providing a plurality of different operating modes.

Similar systems are disclosed by patent documents GB-A-964937, GB-A-1126159 and US-A-4981043.

As is known, the pieces in rotating machining are often subject to balancing in order to prevent the oscillations induced by unwanted imbalances from causing the piece in machining to perform eccentric rotations with respect to the main axis of rotation. Common rotating parts can be, for example, rotary motors possibly equipped with a shaft or they can also simply consist of a wheel.

In general, the measurement systems for conventional balancing machines are configured to detect the vibrations induced on the rotation shaft resulting from imbalances.

Currently, substantially three different types of systems are known.

Oscillating support systems include at least one sliding support on which a rotating shaft can be supported, a fixed support on which the sliding support is constrained in a compliant way, and at least one electrodynamic detector. The latter is therefore operatively connected to the sliding support by means of a connecting rod connected to a mobile coil in such a way as to be able to detect signals proportional to the vibration speed of the rotating shaft.

The rigid support systems include sliding wheels on which the rotating shaft rests, at least one support frame for the sliding wheels, at least one fixed support and a piezoelectric transducer arranged between the fixed support and the support frame. The wheels are generally convex or lapped and must not have the same diameter or similar to the diameter of the shaft resting thereon.

The piezoelectric transducer is configured to detect a signal proportional to the force exerted by the support frame on the transducer which can be determined, as known, by the deformation of the piezoelectric transducer.

The semi-rigid support systems are very similar to rigid support systems and, in fact, like rigid support systems, they are also known by the term force measurement systems.

The main difference between the two systems is given by the fact that, in the latter case, the support frame includes two or more zones of elastic bending thanks to which it is possible to capture micro-deformations of the support frame. Furthermore, the transducer is electrodynamic, is operationally connected to the support frame and comprises a moving coil configured to detect a signal proportional to the deformation of the frame and to the deformation rate.

The known technique described comprises some important drawbacks.

In particular, oscillating support systems require specific calibration for each type of rotating device resting on the oscillating support. Furthermore, the construction of the supports is quite complex and the sensitivity of the system is greatly influenced by some external parameters such as, for example, the weight of the rotating device and/or the type of measurement equipment.

The rigid or semi-rigid support systems, on the other hand, have the important drawbacks of not allowing high precision, of having longer measurement times than oscillating support systems, of requiring heavier structures and of requiring specific precautions; as already mentioned, in fact, rigid support systems cannot allow measurements at high revolutions since the rotation frequency must be far from, and below, the resonant frequency of the support frame.

In this situation, the technical task underlying the present invention is to devise a measuring system for balancing machine of a piece in rotating machining capable of substantially obviating at least part of the aforementioned drawbacks.

Within the scope of said technical task it is an important object of the invention to obtain a measuring system for balancing machine of a piece in rotating machining which is capable of carrying out measurements both in oscillating mode, and in rigid or semi-rigid mode.

Therefore, a further object of the invention is to provide a measuring system that is capable of effectively detecting vibrations on rotating devices of any weight and size. Another important object of the invention is to provide a system for measuring rotary unbalances for a balancing machine of a rotating piece in machining which allows automatic and autonomous switching between the different modes according to the device placed therein.

The technical task and the specified aims are achieved by a measuring system for balancing machine of a piece in rotating machining as claimed in the annexed claim 1.

Preferred technical solutions are highlighted in the dependent claims.

The characteristics and advantages of the invention are clarified below by the detailed description of preferred embodiments of the invention, with reference to the accompanying drawings, in which:
the Fig. **1** shows a side view of a measuring system for balancing machine of a piece in rotating machining in the rotary processor according to the invention in which the blocking means defines the first operating mode also known as oscillating support system;
the Fig. **2** illustrates a side view of a measuring system for balancing machine of a piece in rotating machining according to the invention in which the blocking means define the second operating mode also known as semi-rigid support system;
the Fig. **3** is a side view of a measuring system for balancing machine of a piece in rotating machining according to the invention in which the blocking means define the second mode of operation and include the piezoelectric transducer in a manner that create a rigid support system; and
the Fig. **4** shows a front view of a measuring system for balancing machine of a piece in rotating machining according to the invention comprising two pairs of supports in such a way as to get the centre of gravity position of the piece in machining being machined along a direction perpendicular to the plane and parallel to the axis of rotation.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the measuring system for balancing machine of a piece in rotating machining according to the invention is globally indicated with the number **1.**

The system 1 is preferably applicable on balancing machines, i.e. on machines whose purpose is to compensate the unbalances of a piece in rotating machining **10.** The piece in machining 10 can be, for example, any rotating motor or even a simple wheel. In any case, the piece in machining 10 defines its own axis of rotation around which it rotates and, therefore, it defines a rotation.

In addition, if they are present imbalances in the rotation, generally due to the misalignment of the centre of mass with respect the central axis of rotation, the piece in machining defines at least a vibration **V.**

The vibration V is substantially determined by the imbalances of the rotating part 10. Of course, the vibration V can be realized by periodic displacements along multiple directions. Preferably, however, the vibration V is at least definable in a plane **1a** during rotation. The plane 1a is therefore preferably the plane perpendicular to the rotation axis of the piece 10 and is the plane along which the direction of the vibration V of the piece in machining 10 is preferably identified.

The system 1 therefore comprises at least one fixed support **2.**

The fixed support 2 is able to support at least the system 1. Furthermore, preferably, the fixed support 2 is also able to support the piece in machining 10 which interacts with the system 1.

In this regard, preferably, the fixed support 2 can be a frame, for example that can be constrained to a ground or a wall or that can be supported in a stable manner on one of them.

Alternatively, the fixed support 2 can be a device that can be fastened to an external structure, for example a work bench.

In this case, the fixed support 2 could include a skid, for example with rollers or balls, adapted to be operatively connected with one or more linear guides arranged on the external structure.

In particular, such a fixed support 2 can be easily moved on the external structure in such a way as to position it in the best way according to the piece in machining 10 interacting with the system 1.

The piece in machining 10, in detail, is preferably adapted to be fully supported by system 1 itself. For this purpose, the system 1 also comprises a movable support **3.**

The movable support 3 is connected to the fixed support 2. The movable support 3 is, therefore, configured to allow the housing of at least part of the piece 10.

The term housing means that the piece 10 can also simply be placed on the movable support 3.

In any case, the movable support 3 supports the piece 10 and the movable support 3 is, at the same time, supported by the fixed support 2.

The connection between the movable support 3 and the fixed support 2 is preferably made by at least one connector **8.** The connector 8 is preferably configured to create a compliant constraint between the movable support 3 and the fixed support 2 in at least one point.

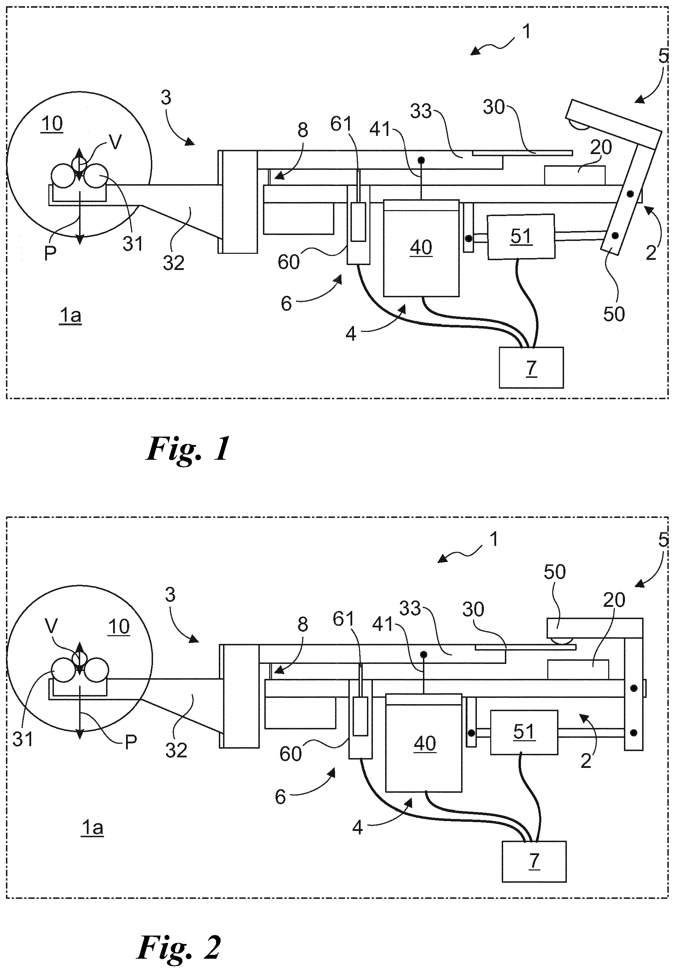

For example, the connector 8 can be a hinge, suitable for making a fulcrum, or a leaf spring, as shown in Figs. 1-3, adapted to allow reciprocal movement between the supports 2, 3.

Preferably, the connector 8 defines a rotation axis **8a** or allows the oscillations of the fixed support 2.

The rotation axis 8a is substantially perpendicular to the plane 1a. Therefore, it is preferably parallel to the rotation axis of the piece 10.

The movable support 3 can therefore rotate around the rotation axis 8a with respect to the fixed support 2 or oscillate with respect to the same fixed support 2.

In this configuration, therefore, the movable support 3 substantially defines a lever which can rotate with respect to the fixed support 2 around the rotation axis 8a.

Of course, the connector 8 could also allow relative movements between the different supports 2, 3. For example, the connector 8 could also include a simple guide within which a slider attached to the movable support 3 can translate in such a way as to allow reciprocal translation between the supports 2, 3.

In general, in any case, and with any connector 8, the movable support 3 is configured to move relative to the fixed support 2 along the plane 1a. The movement, moreover, is proportional to the vibration V.

Therefore, substantially, the piece 10 resting on or housed on the movable support 3 transmits the vibration to the movable support 3 and the latter moves relative to the fixed support 2 proportionally, if not exactly integrally to the piece 10, in the plane 1a, and therefore in proportion to the vibration V.

The system 1 also comprises detection means **4.**

The detection means 4 are integral with the fixed support 2. They can therefore be constrained to the fixed support 2 or also constrained to the external structure as well as the fixed support 2 itself.

The detection means 4 are also operatively connected to the movable support 3. In particular, the detection means 4 are adapted to detect the vibration V. To this end, the detection means 4 comprise an electrodynamic transducer **40.**

The electrodynamic transducer 40 is an element known per se, in any case suitable for detecting a displacement determined by the vibration.

The electrodynamic transducer 40 therefore includes a coil **41.**

The coil 41 is movable and is preferably constrained to the movable support 3 in such a way as to be moved proportionally thereto. Preferably, moreover, especially if the connector 8 defines a rotation axis 8a, the coil 41 is connected to the movable support 3 at a point spaced apart from the connector 8.

The detection means 4 also include a piezoelectric transducer **42.** The piezoelectric transducer 42 is also known per se and is configured to detect an electrical signal in relation to the force/deformation to which it is subjected. Therefore, preferably, if present, the piezoelectric translator 42 is able to be placed in contact with the movable support 3 in such a way that the latter, when moved, deforms the piezoelectric transducer 42 in proportion to the vibration V.

The system 1 also includes blocking means 5. The blocking means 5 are configured to solidly constrain, on command, the movable support 3 and the fixed support 2.

Substantially, therefore, the blocking means 5 are able to make the constrain between the supports 2, 3, already present preferably thanks to the connector 8, rigid or non-rigid depending on the configuration of the blocking means 5.

In fact, the latter are configured in such a way as to define at least a first detection mode and a second detection mode.

In the first detection mode the supports 2, 3 are not constrained by the blocking means 5. Therefore, the movable support 3 is free to be moved by the piece in machining 10 and to oscillate proportionally to the vibration V, with respect to the fixed support 2

The detection means 4, therefore, in this first mode, detect a displacement of the movable support 3 determined by the vibration V.

This first detection mode is, therefore, substantially of the oscillating support type.

In the second detection mode, however, the supports 2, 3 are integrally constrained by the blocking means 5. In this case, therefore, the movable support 3 can only move integrally with the fixed support 2 and, since the supposed fixed support 2 is not mobile, the vibrations V can be discharged on the movable support 3 only as stresses and/or deformations.

The detection means 4, in this second mode, detect an effort on the movable support 3 itself.

Basically, the second detection mode as just described is of the semi-rigid support type.

Since the detection means 4 also include the piezoelectric transducer 42, they detect an effort acting on the movable support 3.

In this case, the vibrations V push the movable support 3 against the piezoelectric transducer 42 so as to deform it locally and allow the itself to determine the effort to which it is subjected.

It is advantageous that the piezoelectric transducer (42) is part of the blocking means 5 themselves, i.e. that the movable support 3 is locked by the piezoelectric transducer 42 itself.

Structurally, in order to achieve the characteristics described above, it may be advantageous, even if not necessary, to adopt a structure as shown in Figs. 1-3. Therefore, the movable support 3 can include rollers **31.**

The rollers 31, for example two, can be adapted to allow the housing of part of the piece 10. If the piece is equipped with a shaft, the rollers 31 can be able to allow the shaft itself to rest on its lateral surface.

Furthermore, the movable support 3 can be constrained in a compliant way to the fixed support 2 through the connector 8, in such a way as to define a lever, preferably of the first degree, including a first arm **32** and a second arm **33.**

The first arm 32 preferably connects the connector 8 to the rollers 31. The second arm 33 preferably connects the connector 8 with a free end of the movable support 3. The free end of the movable support 3 is, therefore, the area which preferably interacts with the blocking means 5.

In order to also improve the detection of deformations in the second detection mode, it may be advantageous to constrain a leaf spring **30** to the free end of the movable support 3.

Said leaf spring 30 therefore defines a deformability that can be detected, in proportion to the vibration V, by the detection means 4.

Furthermore, in particular, the blocking means 5 preferably include at least one obstruction device **50.**

The obstruction device 50 is substantially a movable or removable element which, in at least one position, can obstruct the movement of the movable support 3.

Preferably, therefore, the obstruction device 50 defines at least one block configuration and a rest configuration.

The blocking configuration of the obstruction device 50 is substantially the position which allows the second detection modes to be realized, while the rest configuration is the position which allows the first detection mode to be realized.

In the blocking configuration, the obstruction device 50 obstructs the relative movement between the movable support 3 and the fixed support 2.

In the rest configuration, the obstruction device 50 does not obstruct the movement. The obstruction device 50 can also be a simple barrier available at the free end of the movable support 3. It can therefore be manually controlled by a user, or removable.

For example, the obstruction device 50 can include quick couplings or it can simply be rigidly constrained to the fixed support 2 and to the movable support 3 by means of bolts.

In this case, the transition from one mode to another is less rapid.

Alternatively, the obstruction device 50 can be controlled by an actuator **51.**

The actuator 51 is, if present, preferably configured to bring the obstruction device 50 from the locking configuration to the rest configuration. Of course, the actuator 51 can also take the obstruction device 50 from the rest configuration to the lock configuration.

Structurally, it can be a simple linear actuator, for example a piston cylinder. The obstruction device 50 can be a cursor which can simply be moved along a direction on the plane 1a.

Alternatively, the obstruction device 50 and the actuator 51 can provide a connecting rod mechanism, as shown in Figs. 1-2.

In this case, the actuator 51 and the obstruction device 50 can be hinged to the fixed support and the actuator 51 can be constrained in a compliant way to the obstruction device 50 in such a way as to rotate the same according to the extension imparted by the piston.

As already mentioned above, the piezoelectric transducer 42 is preferably connected to the obstruction device 50. Therefore, the piezoelectric transducer 42 is part of the blocking means 5 and is able to lock, even more in detail, the free end of the movable support 3.

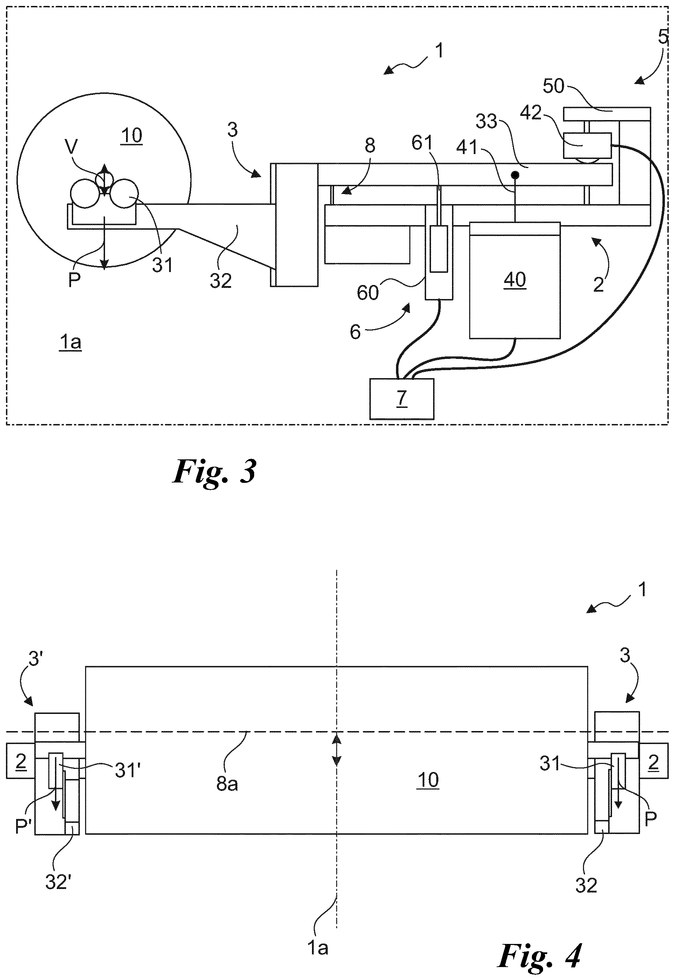

The transducer 42 can therefore also be used with removable blocking means 5, as shown in Fig. 3, or with movable blocking means 5. This last modality is not shown in the Figures but it is easily achievable, for example, by replacing the leaf spring of Figs. 1-2 with a rigid element and arranging the piezoelectric transducer 42 in the contact area between the obstruction device 50 and the movable support 3.

The system 1 also preferably comprises control means **7.**

The control means 7 can substantially include an electronic processor capable of receiving signals of the electrical type and processing them and possibly comparing them with other data.

The control means 7 can therefore include a database, a management system and other hardware or software elements capable of allowing the management and control of some parts of the system 1.

The control means 7, in fact, are preferably operationally connected at least to the detection means 4.

The control means 7 are, moreover, preferably operationally connected at least to said actuator 51. Therefore, they are configured to bring the obstruction device 50 to the rest configuration in such a way as to realize the first mode detection. Furthermore, they can also bring the obstruction device 50 into the blocking configuration in such a way as to realize said second detection mode.

The control means 7 can allow the actuation of the actuator 51 thanks to a command given by a user.

Or, the control means 7 could be programmed to operate the actuator 51 based on some specific parameters. For example, a very relevant parameter within the sector of balancing machines is the weight **P** of the piece in machining 10. The latter, in fact, defines a weight P of its own which can significantly affect the efficiency of the measurement mode.

Advantageously, the system 1 can therefore also comprise acquisition means **6.**

The acquisition means 6 are operatively connected to the movable support 3.

Furthermore, they are configured to acquire the weight P of the piece 10. In order to achieve this configuration, for example, the acquisition means 6 can include a linear transducer **60.**

The linear transducer 60 is known per se and is substantially adapted to allow to measure a displacement along a predetermined direction and to determine a force value, for example of weight, proportional to the displacement value detected.

The linear translator 60, therefore, may include a stem **61.** The stem 61 is preferably constrained to the movable support 3. Even more conveniently, in the preferred embodiment, the stem 61 is constrained to the movable support 3 at a point spaced from the connector 8.

The stem 61 can be substantially a rigid bar capable of transmitting the movement of the movable support 3 to the linear transducer 60.

If the acquisition means 6 are present, the control means 7 are also operatively connected to them.

Furthermore, preferably, the control means are configured to select one of the first and second modes in relation to the weight P.

In this regard, in particular, the control means 7 can define a reference weight value. The control means 7 can therefore advantageously be configured to select the first detection mode when the weight P is lower than the reference weight value and to select the second detection mode when the weight P is equal to or higher than the weight value of reference.

Alternatively, the system 1 can also include a plurality of fixed supports 2 and movable supports 3.

For example, the system 1 can include, as shown in Fig. 4, a second fixed support **2'** and a second movable support **3'.** Naturally, the second movable support 3' can include its own rollers **31'** and its own first arm **32'.**

Preferably, if present, the second fixed support 2' and the second movable support 3' are mirrored side by side with the supports 2, 3 along a direction perpendicular to the plane 1a. In this way the movable supports 3, 3' house two different ends of the piece in machining 10.

The acquisition means 6 can, therefore, be able to acquire also a second weight **P'.** The second weight P' is the weight of piece 10 in correspondence with the second supports 2', 3'. To detect the second weight P', the acquisition means 6 can include a second transducer **60'** connected by means of a second stem **61'** to the second movable portion 3'.

The control means 7 can advantageously be configured to process the weights P, P' in such a way as to identify the centre of mass of the piece in machining 10 along the direction perpendicular to the plane 1a.

This fact can be particularly advantageous for the balancing steps of the piece in machining 10.

The operation of the rotation imbalance measuring system for balancing machine of a piece in rotating machining 1 previously described in structural terms is as follows. Basically, while the piece in machining 10 rotates to rest on the movable support 3, the detection means 4 acquire information on the vibrations V, or on the imbalances, according to the mode selected by the control means 7 or by the user.

In the automatic embodiment of the system 1, the control means 7 process the weight P of the piece 10 acquired by the acquisition means 6 and, if necessary, operate the blocking means to set the best detection mode.

In fact, for pieces 10 of low weight P the first detection mode, i.e. the oscillating mode, is generally more convenient and precise, while for pieces 10 of heavier weight P the second detection modes, i.e. the rigid or semi-rigid modes, are generally more convenient.

The invention therefore also includes a new measuring and balancing method. The methods essentially and advantageously include at least the step of selecting the detection mode by means of the control means 7.

The selection is then carried out according to the methods and parameters as previously described.

For the balancing procedure, it may be of particular significance to detect both the weights P, P' of the ends of the piece in machining 10 in order to be able to correctly extrapolate the position of the centre of mass of the piece in machining 10 itself and facilitate balancing.

The rotation imbalance measuring system for balancing machine of a piece in rotating machining 1 according to the invention achieves important advantages.

In fact, the rotation imbalance measuring system for balancing machine of a piece in rotating machining 1 allows measurements to be made both in oscillating mode and in rigid or semi-rigid mode.

This selection of modes, on the other hand, is substantially always carried out by the same structure without the need to change the measuring system or move the piece to another machine.

Furthermore, thanks to the selection of the modes, the measuring system 1 allows to effectively detect vibrations on rotating devices of any weight and size.

The selection of the mode, in addition, can be done both automatically and autonomously and manually.

The invention is susceptible of variants falling within the scope of the inventive concept defined by the claims.

## Claims

1. A rotating imbalance measuring system (1) for a balancing machine of a piece in rotating machining (10),
- said piece in machining (10) defining a rotation and vibration (V) determined by imbalance on at least one plane (1a) during said rotation, and
- said system (1) comprising:
- a fixed support (2),
- a movable support (3) connected to said fixed support (2), configured to accommodate at least part of said part of said piece (10) and configured to move relative to said fixed support (2) along said plane (1a) proportionally to said vibration (V),
- detection means (4) integral with said fixed support (2), operationally connected to said movable support (3) and designed to detect said vibration (V), the detection means (4) comprise at least one electrodynamic transducer (40) including a moving coil (41),
- blocking means (5) configured to constrain rigidly, on command, said movable support (3) and said fixed support (2) in such a way as to define at least:
- a first detection mode wherein said supports (2, 3) are not constrained by said blocking means (5) and said electrodynamic transducer (40) detects a displacement of said movable support (3) determined by said vibration (V), and
- a second detection mode wherein said supports (2, 3) are constrained rigidly by said blocking means (5), and being **characterised in that**
- said detection means (4) further comprise a piezoelectric transducer (42) and **in that** - in said second detection mode said piezoelectric transducer (42) detects a force on said movable support (3) determined by said vibration (V).

2. The system (1) according to claim 1, wherein said piece in machining (10) defines a weight (P) thereof and said system (1) also comprises:
- acquisition means (6) operationally connected to said movable support (3) and configured to acquire said weight (P), and
- control means (7) operationally connected to said detection means (4) and said acquisition means (6) and configured to select one of said modes in relation to said weight (P).

3. The system (1) according to any previous claim, wherein said control means (7) define a reference weight value and are configured to select said first detection mode when said weight (P) is less than said reference weight value and to select said second detection mode when said weight (P) is equal to or greater than said reference weight value.

4. The system (1) according to any of the previous claims, wherein said supports (2, 3) are mutually connected by means of a connector (8) defining a rotation axis (8a) perpendicular to said plane (1a) around which said movable support (3) can rotate in relation to said fixed support (2).

5. The system (1) according to claim 4, wherein said electrodynamic transducer (40) is constrained to said movable support (3) at a point spaced apart from said connector (8).

6. The system (1) according to any of the previous claims, wherein said acquisition means (6) comprise a linear displacement transducer (60) including a stem (61) constrained to said movable support (3) at a point spaced apart from said connector (8).

7. The system (1) according to any of the previous claims, wherein said blocking means (5) comprise an obstruction device (50) defining at least one blocking configuration wherein it obstructs a relative movement between said movable support (3) and said fixed support (2) and a resting configuration wherein it does not obstruct said movement, and an actuator (51) configured to move said obstruction device (50) from said blocking configuration to said resting configuration and vice versa.

8. The system (1) according to claim 7, wherein said actuator (51) is operationally connected to said control means (7) and said control means (7) are configured to bring said obstruction device (50) into said resting configuration so as to implement said first detection mode and to bring said obstruction device (50) into said blocking configuration so as to implement said second detection mode.

9. The system (1) according to claim 7 or claim 8, wherein said piezoelectric transducer (42) is attached to said obstruction device (50) so that said piezoelectric transducer (42) is part of said blocking means (5).

10. The system (1) according to at least claim 2, comprising a second fixed support (2') and a second movable support (3') placed side by side, mirror-like, to said supports (2, 3) along a direction perpendicular to said plane (1a) in such a way that said movable supports (3, 3') accommodate two different ends of said piece in machining (10), said acquisition means (6) being designed to also acquire a second weight (P') at said second supports (2', 3') and said control means (7) being configured to process said weights (P, P') in such a way as to identify a r of mass of said piece in machining (10) along said direction perpendicular to said plane (1a).

## Patentansprüche

1. Rotierendes Umwuchtmesssystem (1) für eine Auswuchtmaschine eines Werkstücks (10), das zu einer rotierenden Bearbeitung unterzogen wird,
- wobei das zu bearbeitende Werkstück (10) eine Rotation und eine Schwingung (V) definiert, die durch Unwucht auf mindestens einer Ebene (1a) während der Rotation bestimmt wird, und
- das System (1) umfassend:
- eine feste Stütze (2),
- eine bewegliche Stütze (3), die mit der festen Stütze (2) verbunden ist, die dazu konfiguriert ist, mindestens einen Teil des Werkstücks (10) aufzunehmen, und dazu konfiguriert ist, sich in Bezug auf die feste Stütze (2) entlang der Ebene (1a) im Verhältnis zu der Vibration (V) zu bewegen,
- Erkennungsmittel (4), die einstückig mit der festen Stütze (2) ausgebildet sind, die operativ mit der beweglichen Stütze (3) verbunden sind und die dazu ausgelegt sind, die Vibration (V) zu erkennen, wobei die Erkennungsmittel (4) mindestens einen elektrodynamischen Wandler (40) umfassen, der eine bewegliche Spule (41) umfasst,
- Sperrmittel (5), die dazu konfiguriert sind, auf Befehl, die bewegliche Stütze (3) und die feste Stütze (2) starr miteinander zu befestigen, um mindestens zu definieren:
- einen ersten Erkennungsmodus, wobei die Stützen (2, 3) nicht durch die Sperrmittel (5) befestigt werden und der elektrodynamische Wandler (40) eine Verschiebung der beweglichen Stütze (3) erkannt, die durch die Schwingung (V) bestimmt wird, und
- einen zweiten Erkennungsmodus, wobei die Stützen (2, 3) starr durch die Sperrmittel (5) befestigt werden,
- und **dadurch gekennzeichnet ist, dass**
- die Erkennungsmittel (4) ferner einen piezoelektrischen Wandler (42) umfassen und dass der piezoelektrische Wandler (42) in dem zweiten Erkennungsmodus eine Kraft auf die bewegliche Stütze (3) erkennt, die durch die Schwingung (V) bestimmt wird.

2. **.** System (1) nach Anspruch 1, wobei das zu bearbeitende Werkstück (10) ein Gewicht (P) desselben definiert und das System (1) ferner umfasst:
- Erfassungsmittel (6), die operativ mit der beweglichen Stütze (3) verbunden sind und dazu konfiguriert sind, das Gewicht (P) zu erfassen, und
- Steuermittel (7), die operativ mit den Erkennungsmitteln (4) und den Erfassungsmitteln (6) verbunden sind und dazu konfiguriert sind, einen der Modi in Zusammenhang mit dem Gewicht (P) auszuwählen.

3. System (1) nach einem der vorhergehenden Ansprüche, wobei die Steuermittel (7) einen Referenzgewichtswert definieren und dazu konfiguriert sind, den ersten Erkennungsmodus auszuwählen, wenn das Gewicht (P) kleiner als der Referenzgewichtswert ist, und den zweiten Erkennungsmodus auszuwählen, wenn das Gewicht (P) gleich oder größer als der Referenzgewichtswert ist.

4. **.** System (1) nach einem der vorhergehenden Ansprüche, wobei die Stützen (2, 3) miteinander über ein Verbindungselement (8) verbunden sind, das eine Rotationsachse (8a) definiert, die sich senkrecht zu der Ebene (1a) erstreckt, um die sich die bewegliche Stütze (3) in Bezug auf die feste Stütze (2) drehen kann.

5. **.** System (1) nach Anspruch 4,
wobei der elektrodynamische Wandler (40) an der beweglichen Stütze (3) an einer Stelle befestigt wird, die von dem Verbindungselement (8) beabstandet ist.

6. **.** System (1) nach einem der vorhergehenden Ansprüche, wobei die Erfassungsmittel (6) einen linearen Verschiebungswandler (60) umfassen, der einen Schaft (61) aufweist, der an der beweglichen Stütze (3) an einer Stelle befestigt wird, die von dem Verbindungselement (8) beabstandet ist.

7. **.** System (1) nach einem der vorhergehenden Ansprüche, wobei die Sperrmittel (5) eine Behinderungsvorrichtung (50) umfassen, die mindestens eine Sperrkonfiguration definiert, wobei sie eine Relativbewegung zwischen der beweglichen Stütze (3) und der festen Stütze (2) behindert, und eine Ruhekonfiguration, wobei sie die Bewegung nicht behindert, sowie einen Aktuator (51), der dazu konfiguriert ist, die Behinderungsvorrichtung (50) von der Sperrkonfiguration in die Ruhekonfiguration und umgekehrt zu bewegen.

8. **.**System (1) nach Anspruch 7, wobei der Aktuator (51) operativ mit den Steuermitteln (7) verbunden ist und die Steuermittel (7) dazu konfiguriert sind, die Behinderungsvorrichtung (50) in die Ruhestellung zu bringen, um den ersten Erkennungsmodus zu implementieren, und die Behinderungsvorrichtung (50) in die Sperrkonfiguration zu bringen, um den zweiten Erkennungsmodus zu implementieren.

9. **.** System (1) nach Anspruch 7 oder 8,
wobei der piezoelektrische Wandler (42) an der Behinderungsvorrichtung (50) befestigt wird, sodass der piezoelektrische Wandler (42) Teil der Sperrmittel (5) ist.

10. **.** System (1) nach mindestens Anspruch 2, umfassend eine zweite feste Stütze (2') und eine zweite bewegliche Stütze (3'), die spiegelbildlich nebeneinander mit den Stützen (2, 3) entlang einer Richtung senkrecht zu der Ebene (1a) angeordnet sind, sodass die beweglichen Stützen (3, 3') zwei verschiedene Enden des zu bearbeitenden Werkstücks (10) aufnehmen, wobei die Erfassungsmittel (6) dazu ausgelegt sind, ein zweites Gewicht (P') an den zweiten Stützen (2', 3') zu erfassen, und die Steuermittel (7) dazu konfiguriert sind, die Gewichte (P, P') zu verarbeiten, um eine Masse des zu bearbeitenden Werkstücks (10) entlang der Richtung, die sich senkrecht zu der Ebene (1a) erstreckt, zu identifizieren.

## Revendications

1. Système de mesure de balourd en rotation (1) pour une machine d'équilibrage d'une pièce en usinage rotatif (10),
- ladite pièce en usinage (10) définissant une rotation et une vibration (V) déterminée par un balourd sur au moins un plan (1a) durant ladite rotation, et
- ledit système (1) comprenant :
- un support fixe (2),
- un support mobile (3) relié audit support fixe (2), configuré pour loger au moins une partie de ladite pièce (10) et configuré pour se déplacer
par rapport audit support fixe (2) le long dudit plan (1a) proportionnellement à ladite vibration (V),
- des moyens de détection (4) solidaires dudit support fixe (2), reliés fonctionnellement audit support mobile (3) et conçus pour détecter ladite vibration (V), lesdits moyens de détection (4) comprenant au moins un transducteur électrodynamique (40) incluant une bobine mobile (41),
- des moyens de blocage (5) configurés pour contraindre rigoureusement, sur commande, ledit support mobile (3) et ledit support fixe (2) de manière à définir au moins :
- un premier mode de détection dans lequel lesdits supports (2, 3) ne sont pas contraints par lesdits moyens de blocage (5) et ledit transducteur électrodynamique (40) détecte un déplacement dudit support mobile (3) déterminé par ladite vibration (V), et
- un second mode de détection dans lequel lesdits supports (2, 3) sont contraints rigoureusement par lesdits moyens de blocage (5),
et étant **caractérisé en ce que**
- lesdits moyens de détection (4) comprennent en outre un transducteur piézoélectrique (42) et **en ce que**
dans ledit second mode de détection le transducteur piézoélectrique (42) détecte une force sur ledit support mobile (3) déterminée par ladite vibration (V).

2. **.** Le système (1) selon la revendication 1, dans lequel ladite pièce en usinage (10) définit un poids (P) de celle-ci et ledit système (1) comprend également :
- des moyens d'acquisition (6) reliés fonctionnellement audit support mobile (3) et configurés pour acquérir ledit poids (P), et
- des moyens de commande (7) reliés fonctionnellement auxdits moyens de détection (4) et auxdits moyens d'acquisition (6) et configurés pour sélectionner l'un desdits modes en fonction dudit poids (P).

3. Le système (1) selon l'une quelconque des revendications précédentes, dans lequel lesdits moyens de commande (7) définissent une valeur de poids de référence et sont configurés pour sélectionner ledit premier mode de détection lorsque ledit poids (P) est inférieur à ladite valeur de poids de référence et pour sélectionner ledit second mode de détection lorsque ledit poids (P) est égal ou supérieur à ladite valeur de poids de référence.

4. **.** Le système (1) selon l'une quelconque des revendications précédentes, dans lequel lesdits supports (2, 3) sont reliés entre eux au moyen d'un connecteur (8) définissant un axe de rotation (8a) perpendiculaire audit plan (1a) autour duquel ledit support mobile (3) peut tourner par rapport audit support fixe (2).

5. **.** Le système (1) selon la revendication 4,
dans lequel ledit transducteur électrodynamique (40) est contraint audit support mobile (3) en un point éloigné dudit connecteur (8).

6. **.** Le système (1) selon l'une quelconque des revendications précédentes, dans lequel lesdits moyens d'acquisition (6) comprennent un transducteur de déplacement linéaire (60) incluant une tige (61) contrainte audit support mobile (3) en un point éloigné dudit connecteur (8).

7. **.** Le système (1) selon l'une quelconque des revendications précédentes, dans lequel lesdits moyens de blocage (5) comprennent un dispositif d'obstruction (50) définissant au moins une configuration de blocage dans laquelle il obstrue un mouvement relatif entre ledit support mobile (3) et ledit support fixe (2) et une configuration de repos dans laquelle il n'obstrue pas ledit mouvement, et un actionneur (51) configuré pour déplacer ledit dispositif d'obstruction (50) de ladite configuration de blocage à ladite configuration de repos et vice versa.

8. **.** Le système (1) selon la revendication 7, dans lequel ledit actionneur (51) est relié fonctionnellement auxdits moyens de commande (7) et lesdits moyens de commande (7) sont configurés pour amener ledit dispositif d'obstruction (50) dans ladite configuration de repos de manière à mettre en œuvre ledit premier mode de détection et pour amener ledit dispositif d'obstruction (50) dans ladite configuration de blocage de manière à mettre en œuvre ledit second mode de détection.

9. **.** Le système (1) selon la revendication 7 ou 8, dans lequel ledit transducteur piézoélectrique (42) est fixé audit dispositif d'obstruction (50) de sorte que ledit transducteur piézoélectrique (42) fasse partie desdits moyens de blocage (5).

10. **.** Le système (1) selon au moins la revendication 2, comprenant un second support fixe (2') et un second support mobile (3') placés côte à côte, en miroir, par rapport auxdits supports (2, 3) selon une direction perpendiculaire audit plan (1a) de manière que lesdits supports mobiles (3, 3') logent deux extrémités différentes de ladite pièce en usinage (10), lesdits moyens d'acquisition (6) étant conçus pour acquérir également un second poids (P') au niveau desdits seconds supports (2', 3') et lesdits moyens de commande (7) étant configurés pour traiter lesdits poids (P, P') de manière à identifier un centre de masse de ladite pièce en usinage (10) selon ladite direction perpendiculaire audit plan (1a).
